# EUROPEAN PATENT APPLICATION

(11) **EP 1 589 684 A1**
(43) Date of publication of application: **26.10.2005**
(21) Application number: 04705937.3
(22) Date of filing: 28.01.2004
(51) Int. Cl.: H04J 15/00, H04J 11/00, H04B 1/707, H04B 7/04

(54) **MULTI-CARRIER RADIO COMMUNICATION SYSTEM, TRANSMISSION DEVICE, AND RECEPTION DEVICE**

(30) Priority: 29.01.2003 JP 2003020515
(71) Applicant: MITSUBISHI DENKI KABUSHIKI KAISHA, Tokyo 100-8310 (JP)
(72) Inventor: TAIRA, Akinori Mitsubishi Denki Kabushiki Kaisha, Tokyo 1008310 (JP)
(74) Representative: Pfenning, Meinig & Partner GbR
(86) International application number: PCT/JP2004/000733
(87) International publication number: WO 2004/075451

(57) **Abstract**

In a communication device at a transmitting side, a by-channel pilot generator (7) generates pilot signals by channels which are spread with a code orthogonal between channels. A common pilot generator (10) generates a pilot signal common to multiple channels. Adders (8), (9), (11), and (12) allocate user data, the common pilot signal, and the pilot signals by channels according to a prescribed frame format, thereby generating transmission signals by channels. In a communication device at a receiving side, a time synchronizing unit (25) and a frequency synchronizing unit (26) establish a timing synchronization and a frequency synchronization using the common pilot signal. A by-channel pilot extractor (29) extracts the pilot signals by channels from a reception signal, after the timing synchronization is established.

## Description

### TECHNICAL FIELD

The present invention relates to a multicarrier radio communication system that includes plural communication devices having multiple transmission/reception antennas. More particularly, the present invention relates to a multicarrier radio communication system that can establish an optimum initial synchronization.

### BACKGROUND ART

A conventional multicarrier radio communication system is explained below. For example, in transmitting and receiving a broadband signal in a mobile environment, a communication device needs to overcome a frequency selective fading. As one of techniques for overcoming the frequency selective fading, a multicarrier radio communication system, particularly, orthogonal frequency division multiplexing (OFDM), is employed in various radio systems. In order to further increase a transmission capacity, a multiple input multiple output (MIMO) system that simultaneously transmits two or more signals using multiple antennas is drawing attention.

A transmitter and a receiver of a conventional MIMO system are explained below (see Non-Patent Literature 1). A configuration (a two-channel configuration) with two transmitting antennas and two receiving antennas is explained as an example. The Non-Patent literature 1 discloses a burst structure. For example, a pilot signal (a pilot part) for channel estimation is added to a burst head for each channel, and user data (a user data part) follows the pilot signal.

In the transmitter, each coding unit receives user data corresponding to the own channel out of two channels (ch1 and ch2) through which data are transmitted simultaneously, and carries out error correction coding. Each modulator receives a coded signal corresponding to the own channel, modulates the signal, and allocates the modulated data in the subcarrier. Next, each inverse fast Fourier transform (IFFT) unit converts a subcarrier signal corresponding to the own channel into a time domain signal (an OFDM signal), and adds a guard interval.

In the MIMO system, since the data simultaneously transmitted through the multiple channels need to be separated at the receiving side, the MIMO system requires a pilot signal to estimate channel information between transmitting/receiving antennas. In the transmitter, a pilot generator individually generates pilot signals corresponding to the channels, and inserts the pilot signals into the transmission bursts according to a frame format.

Last, each IF (intermediate frequency)/RF (radio frequency) unit receives a base band signal built for each channel, up-converts the base band signal to a high-frequency band signal, and transmits the up-converted signal from the antenna. This transmission is carried out omnidirectionally.

On the other hand, at the receiver, each IF/RF unit converts the high-frequency signal received with a corresponding antenna, into a base band signal. The transmitted multiple (ch1 and ch2) are mixed with this base band signal. The IF/RF unit transmits a pilot portion in the base band signal to a weighting controller that calculates a weight of each channel, and transmits user data in the base band signal to a corresponding fast Fourier transform (FFT) unit. At this stage, channels are not separated, and therefore, a pilot signal is transmitted in a format that a code separation is possible.

The weighting controller carries out an despreading of the pilot signal, obtains channel information between the antennas, and calculates a weight for channel separation. On the other hand, the FFT unit individually corresponding to each IF/RF unit converts received user data (a time domain signal) into a frequency domain signal (a signal on each subcarrier).

A frequency signal that is outputted from each FFT unit is mixed with signals of multiple channels. Therefore, a corresponding weighting combining unit gives the weight to the frequency domain signal for channel separation, and generates a reception signal for each channel. A demodulator corresponding to each channel demodulates the generated reception signal. Finally, an error correction unit outputs a reception signal that is corrected for each channel.

When channel information is already known at the transmitter, the transmitter carries out a beam forming at the time of transmitting a signal for each channel, thereby carrying out a more efficient transmission (see Non-Patent Literature 2).

### Non-Patent Literature 1.

The Institute of Electronics, Information and Communication Engineers technical research report RCS2001-135 "Proposal of broadband mobile communication SDM-COFDM system that realizes 100 Mbits/s with MIMO channel"

### Non-patent literature 2.

The Institute of Electronics, Information and Communication Engineers technical research report RCS2002-53 "Eigenbeam space division multiplexing (E-SDM) system in MIMO channel"

However, the above conventional multicarrier radio communication system has the following problems.

According to the conventional MIMO system, since multiple signals are transmitted simultaneously, it is difficult to realize a configuration before the execution of a channel estimation to separate channels, that is, an initial synchronization system. For example, according to the MIMO system, channel information is estimated using a pilot signal spread with an orthogonal code. However, a timing synchronization to recognize a position of the pilot signal, a frequency synchronization to correct a frequency offset attributable to the performance (including other factors such as a phase-locked loop (PLL)) of a local oscillator between a transmitter and a receiver, and the like must be carried out in a state that multiple channels are superimposed. Therefore, in some cases, satisfactory communication characteristics cannot be obtained. However, examinations are carried out heretofor by assuming that the above initial synchronization system operates ideally.

The present invention has been achieved in order to solve the above problems. It is an object of the present invention to provide a multicarrier radio communication system that can realize satisfactory communication characteristics by establishing optimum time/frequency synchronization even in multicarrier (including one carrier) communications using multiple antennas.

### DISCLOSURE OF THE INVENTION

According to a multicarrier radio communication system, the multicarrier radio communication system is configured by a plurality of communication devices having a plurality of transmitting/receiving antennas, the communication device at a transmitting side includes a by-channel known signal generating unit that generates known signals by channels which are spread by a code orthogonal between channels; a common known signal generating unit that generates a known signal common to a plurality of channels (a common known signal); and a transmission signal generating unit that generates transmission signals by channels, by allocating user data, the common known signal, and the known signals by channels according to a prescribed frame format, and the communication device at a receiving side includes an initial synchronizing unit that establishes a timing synchronization and a frequency synchronization using the common known signal; and a by-channel known signal extracting unit that extracts the known signals by channels from a reception signal, after establishing the timing synchronization.

According to the present invention, for example, when a transmitter inserts a common pilot signal into a burst (a transmission signal) and when a receiver uses the common pilot signal to establish time/frequency synchronization, an initial synchronization of time/frequency which is necessary before a channel separation can be established in high precision.

### BRIEF DESCRIPTION OF THE DRAWINGS

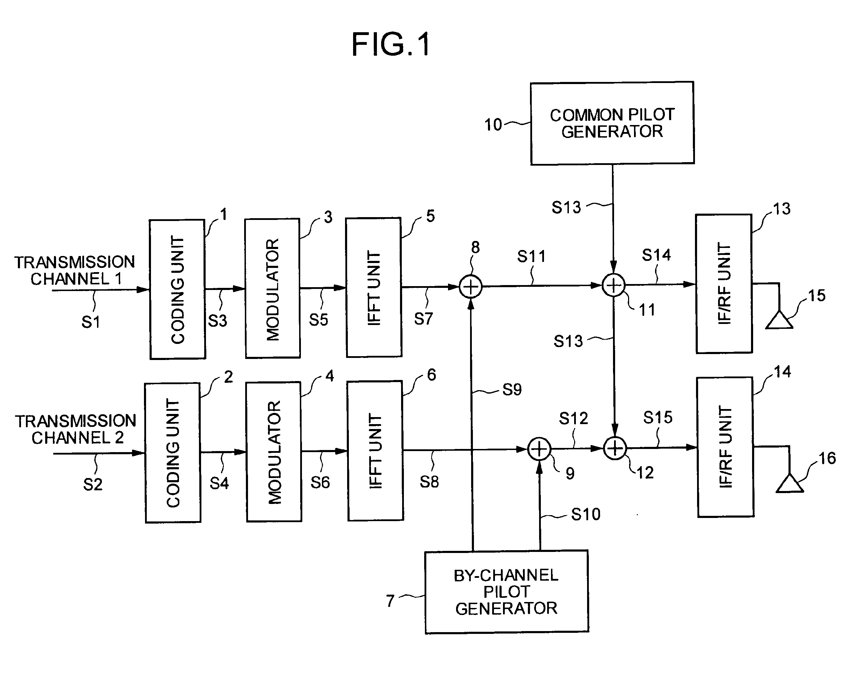

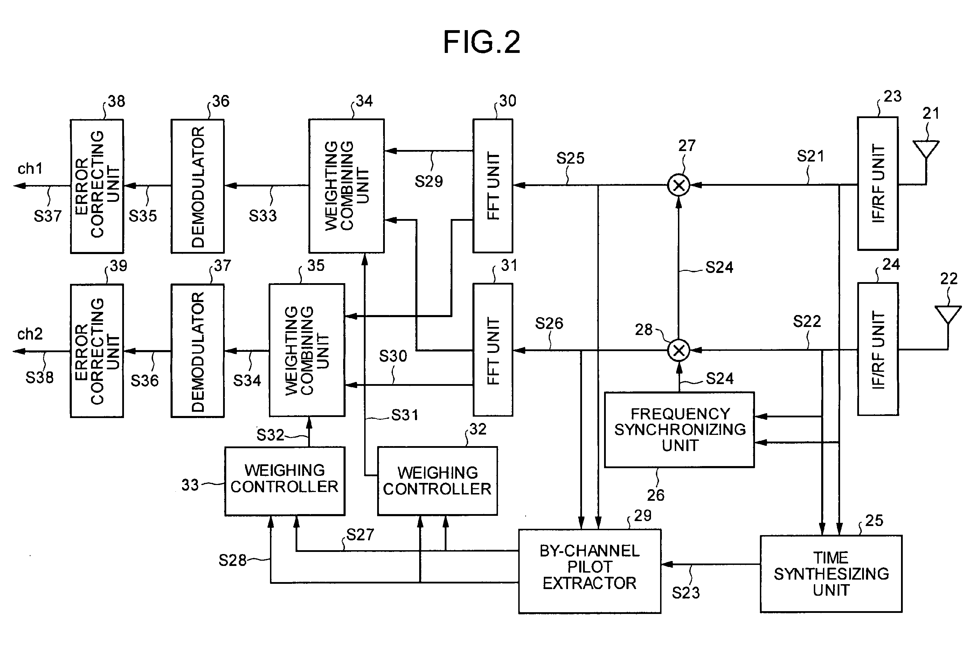

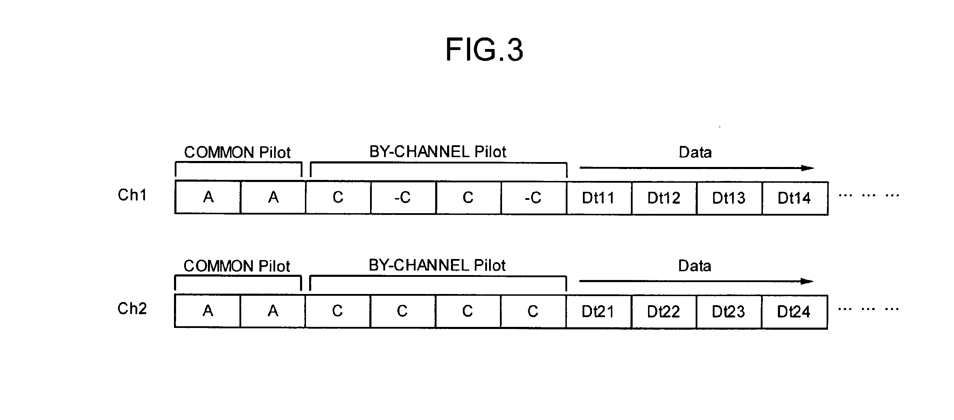

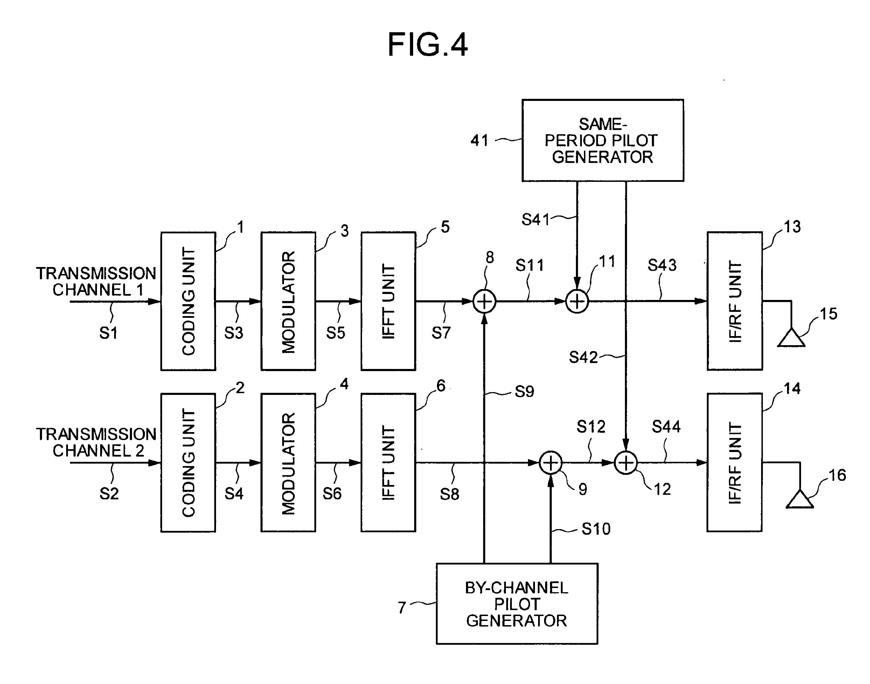

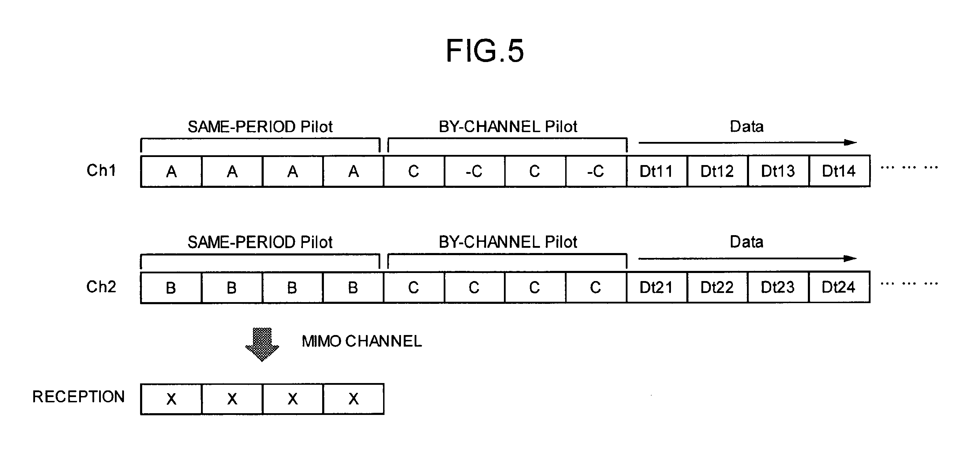

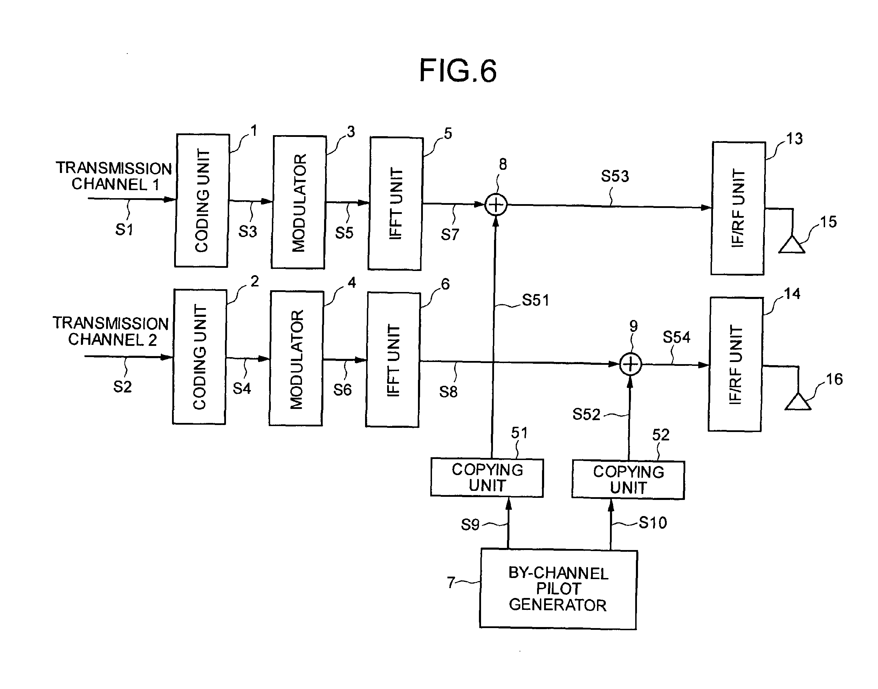

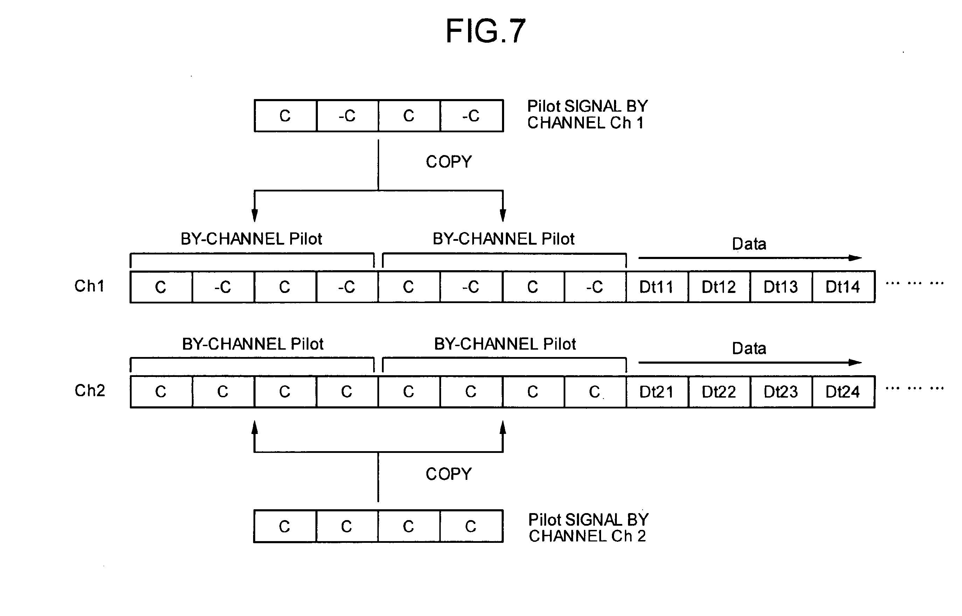

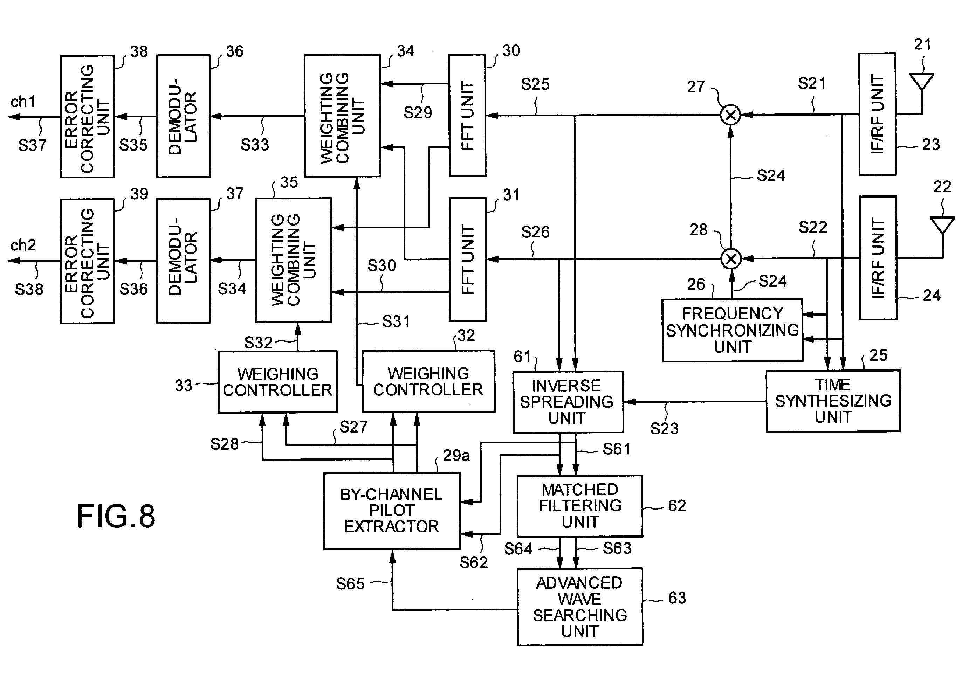

Fig. 1 is a configuration diagram of a transmitter in a multicarrier radio communication system according to a first embodiment of the present invention; Fig. 2 is a configuration diagram of a receiver in the multicarrier radio communication system according to the first embodiment; Fig. 3 depicts a burst format according to the first embodiment; Fig. 4 is a configuration diagram of a transmitter in a multicarrier radio communication system according to a second embodiment of the present invention; Fig. 5 depicts a burst format according to the second embodiment; Fig. 6 is a configuration diagram of a transmitter in a multicarrier radio communication system according to a third embodiment of the present invention; Fig. 7 depicts a burst format according to the third embodiment; and Fig. 8 is a configuration diagram of a receiver in a multicarrier radio communication system according to a fourth embodiment of the present invention.

### BEST MODE FOR CARRYING OUT THE INVENTION

Exemplary embodiments of a multicarrier radio communication system and a communication device according to the present invention are explained in detail below with reference to the accompanying drawings. Note that the embodiments do not limit the present invention.

A multicarrier radio communication system according to a first embodiment is explained first. Fig. 1 is a configuration diagram of a communication device at a transmitting side (hereinafter, "a transmitter") in the multicarrier radio communication system according to the first embodiment of the present invention. In the present embodiment, the number of channels is 2 as an example. In Fig. 1, the transmitter includes coding units 1 and 2 that encode digital signals (user data) S1 and S2 respectively to be transmitted; modulators 3 and 4 that modulate coded data S3 and S4; inverse fast Fourier transform (IFFT) units 5 and 6 that convert modulated signals (subcarrier signals) S5 and S6 into time domain signals with an inverse FFT, and add a guard interval to the time domain signals; a by-channel pilot generator 7 that generates pilot signals S9 and S10 by channels; adders 8 and 9 that insert the pilot signals S9 and S10 into the signals S7 and S8; a common pilot generator 10 that generates a pilot signal S13 common to channels; adders 11 and 12 that insert the pilot signal S 13 into the signals S11 and S12; intermediate frequency (IF) / radio frequency (RF) units 13 and 14 that convert base band signals S14 and S15 after the addition of the pilot signal into high-frequency band signals; and transmitting antennas 15 and 16.

Fig. 2 is a configuration diagram of a communication device at a receiving side (hereinafter, "a receiver") in the multicarrier radio communication system according to the first embodiment of the present invention. The number of channels is 2 as an example. In Fig. 2, the receiver includes receiving antennas 21 and 22; IF/RF units 23 and 24 that convert high-frequency signals into base band signals S21 and S22; a time synchronizing unit 25 that carries out a timing synchronization using a common pilot signal, and generates time synchronization information S23; a frequency synchronizing unit 26 that carries out a frequency synchronization using a common pilot signal, and generates a frequency correction signal S24; frequency correcting units 27 and 28 that correct the base band signals S21 and S22 using the frequency correction signal S24; a by-channel pilot extractor 29 that extracts the pilot signals S27 and S28 by channels from base band signals S25 and S26 after the frequency correction using the time synchronization information S23; fast Fourier transform (FFT) units 30 and 31 that convert the base band signals S25 and S26 as time domain signals into reception signals S29 and S30 on a frequency domain with an FFT; weighing controllers 32 and 33 that calculate weights for channel separation from the pilot signals S27 and S28; weighting combining units 34 and 35 that separate channels based on weight information S31 and S32; demodulators 36 and 37 that demodulate separated reception signals S33 and S34; and error correcting units 38 and 39 that correct errors in demodulated signals S35 and S36 outputted from the corresponding demodulators, and that output final reception signals S37 and S38.

Operations of the transmitter and the receiver that constitute the multicarrier radio communication system are explained in detail below.

First, in the transmitter, the coding units 1 and 2 receive the user data S1 and S2 corresponding to the own channels respectively out of the two channels (ch1 and ch2) through which the data are transmitted simultaneously, and carry out error correction coding to the user data. The modulators 3 and 4 receive the coded data S3 and S4 corresponding to the own channels respectively, modulate the coded data S3 and S4, and allocate the modulated data in the subcarriers. Next, the IFFT units 5 and 6 convert the subcarrier signals S5 and S6 corresponding to the own channels into time domain signals (OFDM signals), and add a guard interval to the time signals.

In order to estimate channel information of each channel at the receiver, the by-channel pilot generator 7 generates the pilot signals S9 and S10 by channels that can be separated without depending on the antennas. These pilot signals are spread with a code orthogonal between the channels. The adders 8 and 9 insert the pilot signals S9 and S10 into the signals S7 and S8 to which the guard interval is added.

The common pilot generator 10 generates the common pilot signal S13 which is necessary for the initial synchronization (timing synchronization and frequency synchronization) as a pre-processing of the channel estimation. The same pilot signal is used in all channels. The adders 11 and 12 insert the common pilot signal S13 into the signals S11 and S12 after the insertion of the pilot signals S9 and S10 by channels.

Fig. 3 is an example of a burst format after the insertion of each pilot signal. For example, the user data, the pilots by channels, and the common pilot are laid out according to a prescribed burst format as shown in Fig. 3.

Last, the IF/RF units 13 and 14 receive the base band signals S14 and S15 built by channels, up-convert the base band signals to high-frequency band signals, and transmit the up-converted signals from the antennas 15 and 16. This transmission is carried out omnidirectionally.

On the other hand, in the receiver, the IF/RF units 23 and 24 convert the high-frequency signals received with the corresponding antennas 21 and 22, into the base band signals S21 and S22. These base band signals S21 and S22 are mixed with the transmitted multiple signals (ch1 and ch2). The IF/RF units 23 and 24 transmit the common pilot signal in the base band signals to the time synchronizing unit 25 and the frequency synchronizing unit 26.

The time synchronizing unit 25 establishes a timing synchronization using the common pilot signal. Since the common pilot signal is transmitted as the same signal from all antennas at the transmitting side, the reception signal in each antenna is in the form that a complex constant is multiplied to a transmission signal (the common pilot signal). For example, in the case of the burst format as shown in Fig. 3, the initial timing synchronization is established by detecting a part where A is repeated (by calculating an autocorrelation of the reception signal, the repetition part can be detected).

The frequency synchronizing unit 26 generates the frequency correction signal S24 for correcting a frequency offset between the transmitter and the receiver using the common pilot signal. In general, a frequency offset between the transmitter and the receiver is mainly due to a difference in the local oscillator frequency of the transmitter and the receiver. A substantially equal frequency offset is considered to be present in all the channels. Therefore, the initial frequency synchronization becomes possible, by detecting a frequency offset in the repetition part of the common pilot signal as shown in Fig. 3 and by generating correction information. In this case, the frequency correcting units 27 and 28 multiply the frequency correction signal S24 to the base band signals S21 and S22 after a down-conversion to correct the frequency offset.

Next, the FFT units 30 and 31 convert the frequency-synchronized base band signals S25 and S26 (time domain signals) into the frequency domain signals (signals on the subcarriers) while the by-channel pilot extractor 29 extracts the pilot signals S27 and S28 by channels from the base band signals S25 and S26 using the time synchronization information S23 which indicates an arrival position of the common pilot signal. The pilot signals S27 and S28 by channels are mainly used to estimate channel information. The weighting controllers 32 and 33 carry out dispreading of the pilot signals S27 and S28 by channels, obtain channel information between the antennas, and calculate the weight information S31 and S32 for channel separation.

A frequency domain signal that is outputted from each FFT unit is mixed with signals of multiple channels. Therefore, the corresponding weighting combining units 34 and 35 carry out a weighting using the weight information S31 and S32 for the channel separation, and generate the reception signals S33 and S34 by channels. The demodulators 36 and 37 corresponding to the respective channels demodulate the generated reception signals S33 and S34. Finally, the error correcting units 38 and 39 correct errors in the demodulated signals S35 and S36, and output the reception signals S37 and S38 after the error correction.

As explained above, according to the present embodiment, the transmitter inserts the common pilot signal into the burst (transmission signal), and the receiver establishes time/frequency synchronization using the common pilot signal. Based on this configuration, the initial synchronization of the time/frequency which is necessary before the channel separation can be established in high precision. Therefore, satisfactory communication performance can be realized.

While the burst configuration is taken as an example in the present embodiment, it is not restricted thereto, and the present invention can be also applied to a system that carries out a continuous transmission. The pilot information which is necessary to establish time/frequency synchronization can be also extracted from a part of multiple receiving antennas. Specifically, only the pilot information is extracted from the base band signal S21, thereby establishing the time/frequency synchronization. While the operation of the multicarrier radio communication system is explained using the transmitter and the receiver for the sake of convenience, it is not limited thereto, and the communication device that constitutes the system can have both the transmitting function and the receiving function.

A multicarrier radio communication system according to a second embodiment is explained next.

In the first embodiment, the same signal is transmitted as the common pilot signal to each channel. On the other hand, in the second embodiment, a repetition signal with the same period is transmitted to each channel, instead of the same signal.

Fig. 4 is a configuration diagram of a transmitter in the multicarrier radio communication system according to the second embodiment of the present invention. According to the present embodiment, the transmitter has a same-period pilot generator 41 that generates same-period pilot signals (known signals) S41 and S42 having the same period between the channels, instead of the common pilot generator 10 according to the first embodiment. Like reference numerals designate like constituent elements as those according to the first embodiment, and their explanation is omitted.

Operations of the transmitter and the receiver that constitute the multicarrier radio communication system are explained in detail below. Only the operations that are different from those according to the first embodiment are explained.

In the transmitter, the same-period pilot generator 41 generates the same-period pilot signals S41 and S42 having the same period between multiple channels as shown in Fig. 5, for example. Fig. 5 depicts a burst format according to the second embodiment. In this example, signal series A and B have the same time length, and these series are repeated by four times respectively. The adders 11 and 12 insert the same-period pilot signals S41 and S42 into the signals S11 and S12 after the insertion of the pilot signals S9 and S10 by channels, and output base band signals S43 and S44 after the addition of the pilot signals. The base band signals S43 and S44 are inserted according to a prescribed burst format as shown in Fig. 5.

On the other hand, in the receiver, the IF/RF units 23 and 24 convert the high-frequency signals received with the corresponding antennas 21 and 22, into the base band signals S21 and S22. The IF/RF units 23 and 24 transmit the same-period pilot signals in these base band signals to the time synchronizing unit 25 and the frequency synchronizing unit 26.

The time synchronizing unit 25 establishes a timing synchronization using the same-period pilot signal. According to the first embodiment, while the same signal is transmitted through each channel as the common pilot signal, the repetition part can be also detected using the same-period signal. In the example shown in Fig. 5, the receiver receives a pattern X which is obtained by linearly adding a pattern A transmitted from the channel 1 (ch1) and a pattern B transmitted from the channel 2 (ch2). In this case, the receiver cannot individually identify the patterns A and B, but can repeatedly receive the pattern X by four times. Therefore, initial time synchronization can be established.

The frequency synchronizing unit 26 generates the frequency correction signal S24 for correcting a frequency offset between the transmitter and the receiver using the same-period pilot signal. In general, a frequency offset between the transmitter and the receiver is mainly due to a difference in the local oscillator frequency of the transmitter and the receiver. A substantially equal frequency offset is considered to be present in all the channels. Therefore, the initial frequency synchronization becomes possible, by detecting a frequency offset in the repetition part (pattern X) of the reception signal as shown in Fig. 5 and by generating correction information.

As explained above, according to the present embodiment, the transmitter inserts the known signal having the same period into the bursts of multiple channels. Based on this configuration, the initial synchronization of the time/frequency which is necessary before the channel separation can be established in high precision. Therefore, satisfactory communication performance can be realized. Moreover, since preamble codes different between channels are used, the same-period pilot unit can be shared for other usage (such as identification of various modes).

A multicarrier radio communication system according to a third embodiment is explained next.

In the first embodiment, the same signal is transmitted as the common pilot signal to each channel. On the other hand, in the third embodiment, the same-period signal is transmitted to each channel, instead of the same signal. Specifically, in the third embodiment, pilot signals by channels are copied and inserted, thereby using plural pilot signals by channels as the same-period pilot signals.

Fig. 6 is a configuration diagram of a transmitter in the multicarrier radio communication system according to the third embodiment of the present invention. According to the present embodiment, the transmitter excludes the common pilot generator 10 and the adders 11 and 12 according to the first embodiment. Instead, the transmitter includes copying units 51 and 52 that copy the pilot signals S9 and S10 by channels, and generate same-period pilot signals S51 and S52 that are configured by plural pilot signals by channels. Like reference numerals designate like constituent elements as those according to the first or the second embodiment, and their explanation is omitted.

Operations of the transmitter and the receiver that constitute the multicarrier radio communication system are explained in detail below. Only the operations that are different from those according to the first or the second embodiment are explained.

In the transmitter, the copying units 51 and 52 copy the pilot signals S9 and S10 by channels, and generate the same-period pilot signals S51 and S52 that are configured by plural pilot signals by channels. Fig. 7 depicts a burst format according to the third embodiment. In this example, signal series "C, -C, C, -C", and "C, C, C, C" have the same time length, and each signal series is repeated twice. The adders 8 and 9 insert the same-period pilot signals S51 and S52 into the signals S7 and S8 after the addition of a guard interval, and output base band signals S53 and S54 after the addition of the pilot signals.

On the other hand, in the receiver, the time synchronizing unit 25 establishes a timing synchronization using the same-period pilot signal. In the example shown in Fig. 7, the receiver receives a pattern obtained by linearly adding the pattern "C, -C, C, -C" transmitted from the channel 1 (ch1) and the pattern "C, C, C, C" transmitted from the channel 2 (ch2). In this case, the receiving side cannot individually identify the patterns, but can repeatedly receive the linearly-added pattern twice. Therefore, initial time synchronization can be established.

The frequency synchronizing unit 26 generates the frequency correction signal S24 for correcting a frequency offset between the transmitter and the receiver using the same-period pilot signal. In this case, initial frequency synchronization becomes possible, by detecting a frequency offset based on the repetition part of the linearly-added pattern, and generating correction information.

As explained above, according to the present embodiment, the transmitter copies and inserts the pilot signals by channels, thereby using the signal configured by plural pilot signals by channels as the same-period pilot signal. The pilot signals by channels are used for the channel estimation. Therefore, the precision of estimating a channel improves by transmitting the plural pilot signals by channels.

A multicarrier radio communication system according to a fourth embodiment is explained next.

Fig. 8 is a configuration diagram of a receiver in the multicarrier radio communication system according to the fourth embodiment of the present invention. According the present embodiment, the receiver includes, in addition to the configurations according to the first, the second, or the third embodiment: a despreading unit 61 that carries out a despread processing to the frequency-synchronized base band signals S25 and S26 (time domain signals); a matched filtering unit 62 that detects despreaded signals S61 and S62 (pilot signal parts by channels for channel estimation: corresponding to a part C in Fig. 3) by a cross correlation processing; and a preceding-wave searching unit 63 that searches a position of a preceding wave from channel impulse responses S63 and S64. The receiver includes a by-channel pilot extractor 29a that extracts the pilot signals S27 and S28 by channels using preceding-wave position information S65, in place of the by-channel pilot extractor 29 according to the first to the third embodiments. Like reference numerals designate like constituent elements as those according to the first, the second, or the third embodiment, and their explanation is omitted.

Operations of the receiver that constitutes the multicarrier radio communication system are explained in detail below. Only the operations that are different from those according to the first, the second, or the third embodiment are explained.

A timing synchronization using a repetition part of a pilot signal is corresponding to an autocorrelation processing of a reception signal. Therefore, in some cases, precision is degraded due to the influence of noise or a delayed wave. According to the fourth embodiment, a precision timing synchronization is applied based on the time synchronization information S23 that is outputted from the time synchronizing unit 25. In other words, it is assumed that the time synchronization information S23 indicating an arrival position of the common pilot signal has a certain level of error. The despreading unit 61 despreads the base band signals S25 and S26 using a spreading code of pilot signals by channels for the periphery of the arrival position of the pilot signal by channels estimated based on the time synchronization information S23.

The matched filter 62 calculates the channel impulse responses S63 and S64 by channels according to the cross correlation processing of the despreaded signals S61 and S62 and the transmitted pilot signals by channels at the transmitter. In the multicarrier system, a guard interval is usually added at the transmission time. Therefore, generally, transmission performance improves when a preceding wave position is selected as a synchronization position. Accordingly, the preceding-wave searching unit 63 determines the preceding wave position based on the channel impulse responses S63 and S64.

The by-channel pilot extractor 29a extracts the pilot signals S27 and S28 by channels from the despreaded signals S61 and S62 based on the preceding-wave position information S65. The matched filtering unit 62 carries out a very complex processing. Therefore, the amount of calculation can be decreased by carrying out the processing within a limited time range based on the time synchronization information S23.

As explained above, according to the present embodiment, the receiver calculates the channel impulse responses by channels according to the cross correlation processing of the despreaded signals of the base band signals by channels and the transmitted pilot signals by channels at the transmitter. The preceding wave position is determined based on a result of this calculation, thereby extracting the pilot signals by channels in high precision. With this arrangement, an initial synchronization of time/frequency which is necessary before a channel separation can be established in high precision. Therefore, more satisfactory communication performance can be realized.

### INDUSTRIAL APPLICABILITY

As described above, the multicarrier radio communication system, the transmitter, and the receiver according to the present invention are useful as communication devices that transmit and receive broadband signals in the mobile environment. The present invention is particularly suitable for the MIMO system that simultaneously transmits two or more signals using multiple antennas.

## Claims

1. A multicarrier radio communication system configured by a plurality of communication devices having a plurality of transmitting/receiving antennas, wherein
the communication device at a transmitting side comprises:
a by-channel known signal generating unit that generates known signals by channels which are spread by a code orthogonal between channels;
a common known signal generating unit that generates a known signal common to a plurality of channels (a common known signal); and
a transmission signal generating unit that generates transmission signals by channels, by allocating user data, the common known signal, and the known signals by channels according to a prescribed frame format, and
the communication device at a receiving side comprises:
an initial synchronizing unit that establishes a timing synchronization and a frequency synchronization using the common known signal; and
a by-channel known signal extracting unit that extracts the known signals by channels from a reception signal, after establishing the timing synchronization.

2. The multicarrier radio communication system according to claim 1, wherein
the communication device at the receiving side further comprises:
a despreading unit that despreads a reception signal with the orthogonal code based on information concerning the timing synchronization;
a matched filtering unit that calculates channel impulse responses by channels from the despreaded signal; and
a preceding wave searching unit that determines a preceding wave position based on the channel impulse response, and
the by-channel known signal extracting unit extracts known signals by channels based on the preceding wave position.

3. A multicarrier radio communication system configured by a plurality of communication devices having a plurality of transmitting/receiving antennas, wherein
the communication device at a transmitting side comprises:
a by-channel known signal generating unit that generates known signals by channels which are spread by a code orthogonal between channels;
a same-period known signal generating unit that generates a repetition signal of the same period between a plurality of channels (a same-period known signal); and
a transmission signal generating unit that generates transmission signals by channels, by allocating user data, the same-period known signal, and the known signals by channels according to a prescribed frame format, and
the communication device at a receiving side comprises:
an initial synchronizing unit that establishes a timing synchronization and a frequency synchronization using the same-period known signal; and
a by-channel known signal extracting unit that extracts the known signals by channels from a reception signal, after establishing the timing synchronization.

4. The multicarrier radio communication system according to claim 3, wherein
the communication device at the receiving side further comprises:
a despreading unit that despreads a reception signal with the orthogonal code based on information concerning the timing synchronization;
a matched filtering unit that calculates channel impulse responses by channels from the despreaded signal; and
a preceding wave searching unit that determines a preceding wave position based on the channel impulse response, and
the by-channel known signal extracting unit extracts known signals by channels based on the preceding wave position.

5. A multicarrier radio communication system configured by a plurality of communication devices having a plurality of transmitting/receiving antennas, wherein
the communication device at a transmitting side comprises:
a by-channel known signal generating unit that generates known signals by channels which are spread by a code orthogonal between channels;
a same-period known signal generating unit that copies the known signals by channels, and generates a repetition signal of the same period between a plurality of channels (a same-period known signal), configured by a plurality of the same known signals by channels; and
a transmission signal generating unit that generates transmission signals by channels, by allocating user data, and the same-period known signal, according to a prescribed frame format, and
the communication device at a receiving side comprises:
an initial synchronizing unit that establishes a timing synchronization and a frequency synchronization using the same-period known signal; and
a by-channel known signal extracting unit that extracts the known signals by channels from a reception signal, after establishing the timing synchronization.

6. The multicarrier radio communication system according to claim 5, wherein
the communication device at the receiving side further comprises:
a despreading unit that despreads a reception signal with the orthogonal code based on information concerning the timing synchronization;
a matched filtering unit that calculates channel impulse responses by channels from the despreaded signal; and
a preceding wave searching unit that determines a preceding wave position based on the channel impulse response, and
the by-channel known signal extracting unit extracts known signals by channels based on the preceding wave position.

7. A transmitting device (a communication device at a transmitting side) having a plurality of transmitting antennas, the transmitting device comprising:
a by-channel known signal generating unit that generates known signals by channels which are spread by a code orthogonal between channels;
a common known signal generating unit that generates a known signal common to a plurality of channels (a common known signal); and
a transmission signal generating unit that generates transmission signals by channels, by allocating user data, the common known signal, and the known signals by channels according to a prescribed frame format.

8. A transmitting device (a communication device at a transmitting side) having a plurality of transmitting antennas, the transmitting device comprising:
a by-channel known signal generating unit that generates known signals by channels which are spread by a code orthogonal between channels;
a same-period known signal generating unit that generates a repetition signal of the same period between a plurality of channels (a same-period known signal); and
a transmission signal generating unit that generates transmission signals by channels, by allocating user data, the same-period known signal, and the known signals by channels according to a prescribed frame format.

9. A transmitting device (a communication device at a transmitting side) having a plurality of transmitting antennas, the transmitting device comprising:
a by-channel known signal generating unit that generates known signals by channels which are spread by a code orthogonal between channels;
a same-period known signal generating unit that copies the known signals by channels, and generates a repetition signal of the same period between a plurality of channels (a same-period known signal), configured by a plurality of the same known signals by channels; and
a transmission signal generating unit that generates transmission signals by channels, by allocating user data, and the same-period known signal, according to a prescribed frame format.

10. A receiver (a communication device at a receiving side) having a plurality of receiving antennas, the receiving device comprising:
an initial synchronizing unit that establishes a timing synchronization and a frequency synchronization using a known signal common to a plurality of channels (a common known signal); and
a by-channel known signal extracting unit that extracts known signals by channels spread by a code orthogonal between channels, from a reception signal, after establishing the timing synchronization.

11. The receiver according to claim 10, wherein
the communication device at the receiving side further comprises:
a despreading unit that despreads a reception signal with the orthogonal code based on information concerning the timing synchronization;
a matched filtering unit that calculates channel impulse responses by channels from the despreaded signal; and
a preceding wave searching unit that determines a preceding wave position based on the channel impulse response, and
the by-channel known signal extracting unit extracts known signals by channels based on the preceding wave position.

12. A receiver (a communication device at a receiving side) having a plurality of receiving antennas, the receiving device comprising:
an initial synchronizing unit that establishes a timing synchronization and a frequency synchronization using a repetition signal of the same period between a plurality of channels (a same-period known signal); and
a by-channel known signal extracting unit that extracts known signals by channels spread by a code orthogonal between channels, from a reception signal, after establishing the timing synchronization.

13. The receiver according to claim 12, wherein
the communication device at the receiving side further comprises:
a despreading unit that despreads a reception signal with the orthogonal code based on information concerning the timing synchronization;
a matched filtering unit that calculates channel impulse responses by channels from the despreaded signal; and
a preceding wave searching unit that determines a preceding wave position based on the channel impulse response, and
the by-channel known signal extracting unit extracts known signals by channels based on the preceding wave position.

14. A receiver (a communication device at a receiving side) having a plurality of receiving antennas, the receiving device comprising:
an initial synchronizing unit that establishes a timing synchronization and a frequency synchronization using a repetition signal of the same period between a plurality of channels (a same-period known signal), configured by a plurality of the same known signals by channels; and
a by-channel known signal extracting unit that extracts known signals by channels spread by a code orthogonal between channels, from a reception signal, after establishing the timing synchronization.

15. The receiver according to claim 14, wherein
the communication device at the receiving side further comprises:
a despreading unit that despreads a reception signal with the orthogonal code based on information concerning the timing synchronization;
a matched filtering unit that calculates channel impulse responses by channels from the despreaded signal; and
a preceding wave searching unit that determines a preceding wave position based on the channel impulse response, and
the by-channel known signal extracting unit extracts known signals by channels based on the preceding wave position.
